# EUROPEAN PATENT SPECIFICATION

(11) **EP 3 582 440 B1**
(45) Date of publication and mention of the grant of the patent: **05.05.2021**
(21) Application number: 18207426.0
(22) Date of filing: 21.11.2018
(51) Int. Cl.: H04L 12/24, H04L 12/26

(54) **METHOD AND SYSTEM FOR VIRTUAL NETWORK SERVICE ACTIVATION**
VERFAHREN UND SYSTEM ZUR AKTIVIERUNG VON VIRTUELLEN NETZWERKDIENSTEN
PROCÉDÉ ET SYSTÈME POUR ACTIVATION DE SERVICE DE RÉSEAU VIRTUEL

(30) Priority: 14.06.2018 IN 201841022332; 07.11.2018 US 201816183472
(43) Date of publication of application: 18.12.2019
(73) Proprietor: Infosys Limited, 560-100 Bangalore (IN)
(72) Inventor: SAXENA, Gaurav, Bangalore 560102 (IN); RAWAT, Devendra Singh, Bangalore 560035 (IN); THOTA, Kishore, Andhra Pradesh 522616 (IN)
(74) Representative: Savi, Massimiliano

(56) References cited:
- WO-A2-2015/026785
- US-A1- 2009 181 665
- US-A1- 2017 141 970
- US-A1- 2017 279 702

## Description

### FIELD

This field relates to activating services over a virtual network. More particularly it relates to activating end to end virtual network service, along with multiple validations.

### BACKGROUND

In legacy networks, service providers offer different types of services like broadband, MPLS VPN, VOIP over their physical network infrastructure devices like switches, routers etc. These physical devices are from different equipment vendors and have defined set of installation & configuration process specific to vendor equipment types. Because of physical infrastructure, setting up the services and physical connectivity is simpler.

Document WO2015026785 discloses examples of methods, systems, and devices for automatically and dynamically managing and coordinating network resources used by services between users over a data network having a network infrastructure.

In SDN/NFV the software (Virtual Network Function/ VNF) is decoupled from the hardware to ensure there is no vendor proprietary hardware dependency and further data plane is decoupled from control plane to have centralized control of network, rather than distributed control by each devices. A service provider needs to instantiate the VNFs as virtual machine over cloud based infrastructure for example Openstack, VM Ware etc and do required configurations starting from virtual resources like CPU, memory and virtual network to service configuration for service function chaining. To offer services like Broadband, MPLS VPN, VOIP service providers need to ensure cloud infrastructure is in place, VMs are created, VNFs are instantiated & configured, virtualized network setup is in place to interconnect the VMs, Service function chaining is configured and service is activated and tested end to end.

Therefore, initial configurations of VNF's as well as each and every change has to be analyzed before applying the configurations. Different command syntaxes of different VNF's in multi-vendor network needs also needs to be learned. Upgrading network configurations can cause network outages because of manual errors. Most configuration changes must be synchronized across multiple VNF's. An error on a single VNF among thousands in the network can send data into a dead end.

Accordingly, there is a need for a method and system for activation of end to end network service along with validations.

### SUMMARY

The disclosure provides a system comprising one or more computing devices for implementing an architecture for activation of virtual network service.

### BRIEF DESCRIPTION

**Fig 1** relates to a general purpose computer system which can be used for any of the described embodiment;
**Fig 2a** is a flowchart of an embodiment of the process described herein;
**Fig 2b** is a flowchart of the validation steps of an embodiment of the process described herein;
**Fig 3** is a system describing an embodiment of a system for implementing the present disclosure,
along with the functionality of each of the components of the system;
**Fig 4a** is an example of service ID entered by a user;
**Fig 4b** is a Virtualized service topology view;
**Fig 4c** is a Configuration of Virtualized Network Functions (vCPE);
**Fig 4d** is a Configuration of Virtualized Network Functions (vPE); and
**Fig 4e** is a Virtualized Service Activated & Tested end to end.

### DETAILED DESCRIPTION

The present disclosure provides for activating an end to end virtual network service which includes diagnostic and self-healing. It is independent of the type of vendor network elements used in the network.

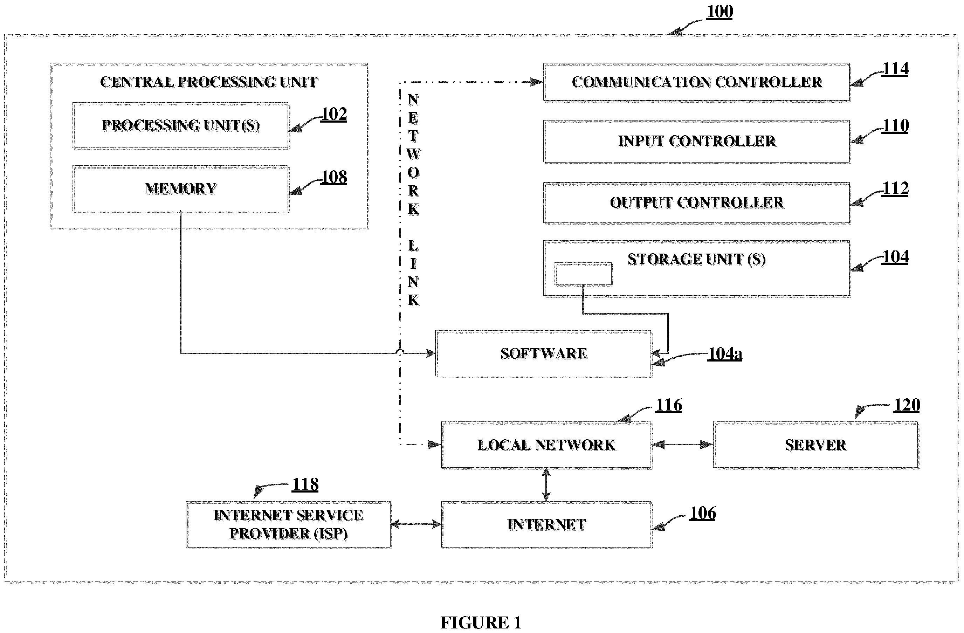

**Fig 1** is a block diagram of a computing device 100 to which the present disclosure may be applied according to an embodiment of the present disclosure. The system includes at least one processor 102, designed to process instructions, for example computer readable instructions (i.e., code) stored on a storage device 104. By processing instructions, processing device 102 may perform the steps and functions disclosed herein. Storage device 104 may be any type of storage device, for example, but not limited to an optical storage device, a magnetic storage device, a solid state storage device and a non-transitory storage device. The storage device 104 may contain software 104a which is a set of instructions (i.e. code). Alternatively, instructions may be stored in one or more remote storage devices, for example storage devices accessed over a network or the internet 106. The computing device also includes an operating system and microinstruction code. The various processes and functions described herein may either be part of the microinstruction code or part of the program (or combination thereof) which is executed via the operating system. Computing device 100 additionally may have memory 108, an input controller 110, and an output controller 112 and communication controller 114. A bus (not shown) may operatively couple components of computing device 100, including processor 102, memory 108, storage device 104, input controller 110 output controller 112, and any other devices (e.g., network controllers, sound controllers, etc.). Output controller 110 may be operatively coupled (e.g., via a wired or wireless connection) to a display device (e.g., a monitor, television, mobile device screen, touch-display, etc.) in such a fashion that output controller 110 can transform the display on display device (e.g., in response to modules executed). Input controller 108 may be operatively coupled (e.g., via a wired or wireless connection) to input device (e.g., mouse, keyboard, touch-pad, scroll-ball, touch-display, etc.) in such a fashion that input can be received from a user. The communication controller 114 is coupled to a bus (not shown) and provides a two-way coupling through a network link to the internet 106 that is connected to a local network 116 and operated by an internet service provider (hereinafter referred to as 'ISP') 118 which provides data communication services to the internet. Network link typically provides data communication through one or more networks to other data devices. For example, network link may provide a connection through local network 116 to a host computer, to data equipment operated by an ISP 118. A server 120 may transmit a requested code for an application through internet 106, ISP 118, local network 116 and communication controller 114. Of course, **Fig 1** illustrates computing device 100 with all components as separate devices for ease of identification only. Each of the components may be separate devices (e.g., a personal computer connected by wires to a monitor and mouse), may be integrated in a single device (e.g., a mobile device with a touch-display, such as a smartphone or a tablet), or any combination of devices (e.g., a computing device operatively coupled to a touch-screen display device, a plurality of computing devices attached to a single display device and input device, etc.). Computing device 100 may be one or more servers, for example a farm of networked servers, a clustered server environment, or a cloud network of computing devices.

One embodiment, of the disclosure allows network operators to create/update end to end network service configurations without delving into the intricacies of Virtual Network Services. (VNS) spreading across multiple domains (Enterprise/Retail) or different VNF's/PNF's. In an embodiment, this disclosure will provide a user interface as well as REST based north-bound API for operators or network functions virtualization orchestrator (NFVO)/ virtual network functions manager (VNFM) to provide the VNS details in TOSCA/YANG format. Users will be able to attach various service configurations in a generic way for each VNF/PNF. In an embodiment, the disclosure will use model driven architecture to convert the configurations to VNF/PNF specific commands and abstract the complexity of different types of syntax & command lines. For southbound interaction an adapter architecture will be provided which will allow different VNF/PNF to plug-in seamlessly. One embodiment of the disclosure will also provide test & diagnostic functionality for example: service connectivity check, performance, rate-limiting at each step of configuration at virtual infrastructure and functional level. Once the VNS is successfully applied, the configuration will be updated in database which can be referred for any future updates.

In one embodiment, the architecture implementing this disclosure is a 4 tier model comprising of
i. Client Browser layer
ii. UI Helper Layer
iii. Business Logic Layer
iv. Source System Layer

Client Browser Layer is the browser on which the client is operating on.

UI Helper Layer provides the UI through which a user creates a request for a service activation, and gets notification for the activation, or if any error.

Business logic layer is the separation between the UI and the data repositories, and implements the business rules if any. It simplifies maintenance and integration of new components and subsystems.

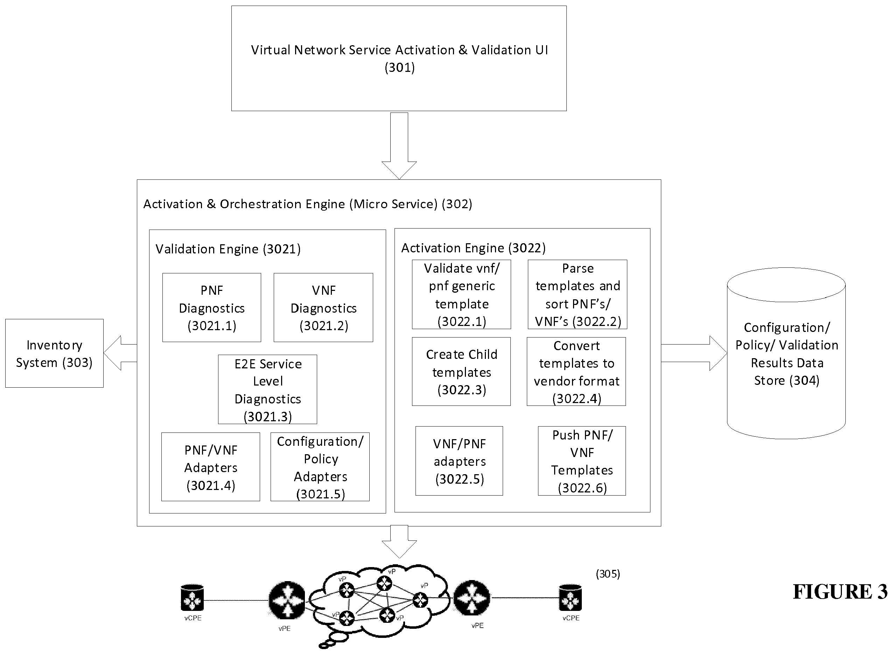

The source system layer comprises of the components specific to this disclosure. The components are described in detail along with the explanation of **Fig 3** below. The source systems are the PNFs/VNF's from which data is being pushed /fetched through adaptors

Following is a description of **Fig 3** explaining an embodiment of a system for implementing the present disclosure, along with the functions of various components therein. In one embodiment, the user interface (301) connects to Activation & Orchestration Engine (AO) (302). The Activation Engine (AE) (3022) will be the brain of AO. The AO engine exposes the REST API's to perform the CRUD operations of the service - Create, read, Update, Delete. The AO engine may also provide integration among different AO components like validation engine (VE) (3021), template converter (3022.4) & adaptor layer via a messaging layer in an architecture for the present disclosure. This is implemented using Spring Boot & Spring REST modules. Role Based Access Control (RBAC) is used to authenticate & authorize the users accessing REST API. All operations are logged to database to provide auditing functionality.

In one embodiment, the Validation Engine (VE) may perform multiple checks on the integrity of the templates and verification of the service. The validation (3022.1) may compose of:
a. Verify the syntax, network topology and forwarding chains of the service based on pre-defined rules;
b. Verify the availability of PNF/VNF and required ports/interfaces referenced in templates. This may be done by referring to service and device inventory system (303);
c. Verify the values of different network parameters to ensure they are within the boundary limits. The boundary limits are fetched from the network element specific inventory; and
d. Verify if the implementation of this service does not affect existing services. This may be done by referencing the service inventory to verify if the requested ports on network elements are available.

The VE may push the templates with positive validation result to the calling component queues.

In one embodiment, the Template Converter (TC) (3022.4) is responsible for creation of the child templates. The child templates correspond to southbound systems. The flow for TC is:
e. Parse the template to fetch the various Southbound systems depending on the device type (3022.2);
f. Fetch device specific templates from device inventory;
g. Create the child templates by filling the relevant data to device templates (3022.3);
h. Push the templates to VE queues;
i. On successful validation put the templates on diagnosis queues (3021.1, 3021.2 & 3021.3); and
j. On successful validation put the templates on adapter queues (3021.4 & 3021.5)

The PNF/VNF adapters and configuration/ Policy adapters (3021.4, 3021.5 & 3022.5) are the way to provide an open pluggable architecture for integrating with southbound systems. They will be responsible to:
k. Provide a communication with downstream system. The downstream system could be the PNF/VNF or an EMS/VNFM. The communication might be via REST API / SNMP / SSH / Netconf etc; and
1. Convert the child templates into specific commands depending on the protocol.

In one embodiment, the VNF/PNF adapters (3022.5) in the Activation Engine contains the functions for creation & activation of VNF's/PNF's. They push the vendor specific VNF/PNF configuration or policy templates into the VNF's/PNF's (3022.6). The adapters in the validation Engine (3021.4) contains the functions related to the validation & verification of the VNF's/PNF's.

The adapters have the following flow:
- Fetch the child templates from specific queues;
- Convert them to downstream system specific language; and
- Apply the changes to PNF/VNF and provide response back to AO via queues.

In one embodiment the end to end Service Level Diagnostic component (SD) (3021.3) is responsible for performing diagnostic on the PNF/VNF. The diagnosis is divided into two main phases:
m. Phase one is done to verify the state of the devices involved. The tests executed varies from ping to checking the load limits (cpu, mem, disk).
n. Phase two corresponds to service level diagnosis which are composed of various tests like Connectivity, Bandwidth & Performance checks etc.

The SD also communicates with external Alarm correlation system to verify VNF/PNF status.

In one embodiment, the data store (304), contains the data related to configurations, policies and Validation results. It may also hold the configuration backup which would be taken every day.

The data store may contain three types of templates related to the VNF/PNF service specific configurations -
Generic templates for a VNF/PNF type;
PNF/VNF Vendor specific templates; and
Templates with the real configurations specific to vendor VNF's / PNF's for a customer.

The data store may also hold policies related to customers, which are to be applied and modified on the fly. The policies may relate to routing, bandwidth, class of service and self-healing.

The data store may also hold the validation test results at the resource and service level. Test results are stored in the Data store after every validation either before or after activation.

The validated and converted templates are then used to configure the virtual network (305).

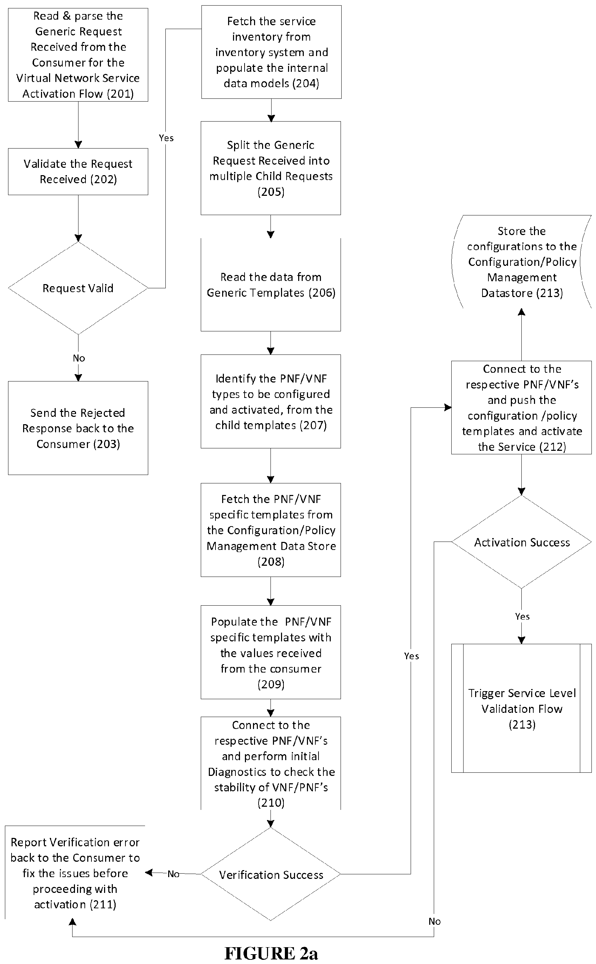

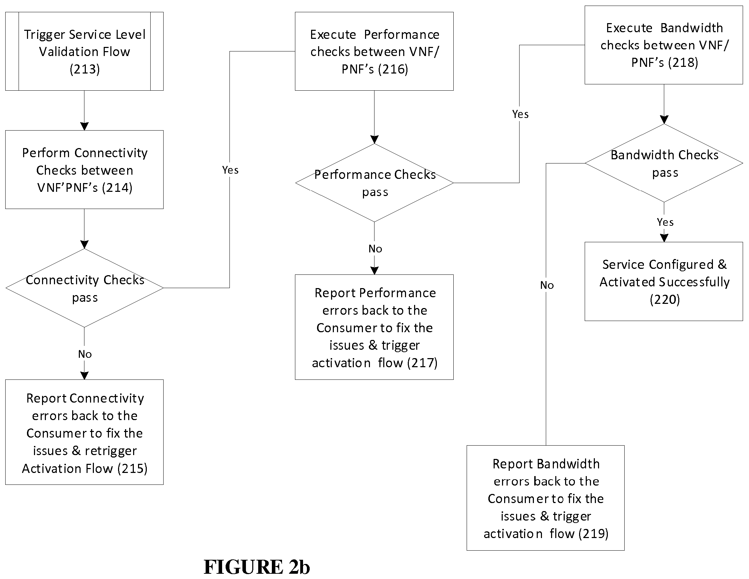

The functionalities of the above system will be described in detail in **Fig 2a** **and** **2b****.** In one embodiment, a user sends request for virtual network service activation using the UI mentioned in the description of **Fig 2a****.** Along with the request, the user can submit a service ID (201). The AO engine will access the inventory and fetch corresponding network topology and configuration details of the VNF/ PNF (201). Once the corresponding information is fetched, the details maybe filled in a template. These templates may be configuration templates, corresponding to the different VCNF/ PNF. The process step (201) may also include parsing the template where the configuration details are filled. Once the template is parsed, the different VNF/ PNF details are separated. In step (202), the template/ parsed information is validated by the Activation & Orchestration Engine (AO Engine). The validation may include checking for correct mapping of VNF/ PNF elements, and correct format of template. The validations may also include whether the configurations and policies templates have been applied as per the actual service configurations. Another validation may include if all VNF's/PNF's are activated successfully and able to see the traffic from end to end.

In an embodiment, if the template validation fails the service request is rejected. The rejected request may be sent back to the user (203).

If the template validation is successful at step (202), Fetch the service inventory from inventory system and populate the internal data models (204). The data may be populated into Generic templates and these can be pushed onto the vendor VNF's/PNF's.

In an embodiment, the validated template maybe then split into one or more child templates (205). In one embodiment AO engine may use model-driven data modelling to split the validated template into child templates. There are some preconfigured models, and the child templates can be mapped to any of the existing models dynamically.

The child template may then be scanned for information. In one embodiment, a set of VNF/ PNF adapters may convert the child template into vendor specific format. Some of the formats may be TOSCA, YANG, XML, OpenFlow, SNMP, or CII. (206, 207).

The PNF/VNF specific templates maybe then fetched from the Configuration or Policy Management Data Store (208), as per the information fetched from the child template. The data store may contain information about the configurations and templates, policies, and validations. In one embodiment, these specific templates maybe filled with the parameter values provided by the user while submitting the request (209).

These values maybe then used to connect to the respective PNF/VNF's and perform initial Diagnostics to check the stability of VNF/PNF's (210). An initial analysis maybe performed by the AO engine to check the stability.

In one embodiment if the validation is successful, connection to the respective PNF/VNF's maybe made, and the required service may be activated (212). The configurations detail maybe stored to the Configuration/Policy Management Data store (213). The activated service may also be verified to check if the activation is successful. If the verification is successful, Service Level Validation Flow maybe triggered (213).

As explained in **Fig 2b****,** in one embodiment, the service level validation flow (213) may include connectivity validations (214), performance validations (216), and bandwidth validations (218) between VNF/ PNF. In case of any of the validation failures, the error notice is sent to the user to fix the issues (215, 217, 219) and restart the process. When the validation is successful, the service is configured and activated successfully (220).

In an embodiment, if the service activation verification, or if the stability connection to the VNF/ PNF fails, the user maybe notified to correct the errors. In one embodiment the error may be related to Interface configuration errors. The other errors may be policy configuration errors and routing errors. The errors may be fixed by correcting the data from inventory / configuration & policy templates. The error may also be related to connectivity issues.

Accordingly, the Virtualized Network Activation Service Framework with one touch automation will help in applying the service level configurations on the VNF's deployed using orchestrators, physical devices (in case of hybrid networks) and carry out the end to end service diagnostics. It also exposes generic API's with industry standards which would help in automation of service level configurations by integrating with OSS/BSS (Operations Support Systems/ Business Support Systems).

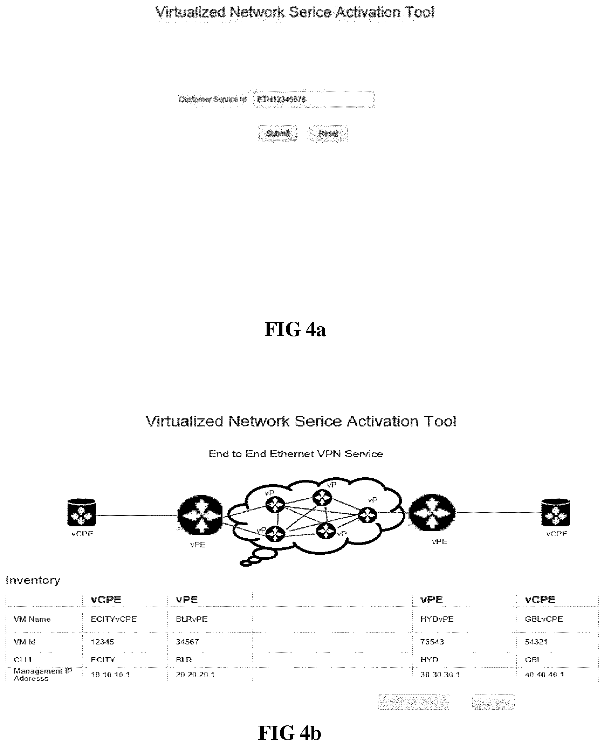

The flow of the process disclosed here is shown in **Fig 4a to Fig 4e****.**

In **Fig 4a****,** the user enters the service ID for which he needs end to end activation over a virtual network. The system retrieves the topology and other relevant detail corresponding to the service ID. **Fig 4b** displays the inventory details and topology fetched against the service ID provided.

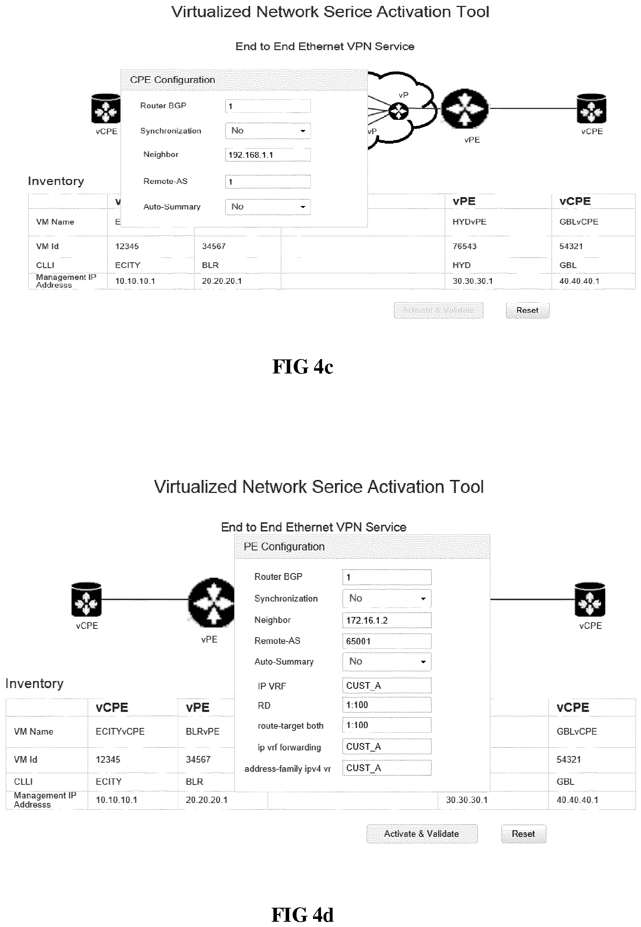

**Fig 4c and 4d** shows the CPE configuration and PE configuration which were extracted from the values in the service ID, and fetched from the configuration template as well. These are the Customer Premise Equipment & Provider Edge equipment. They may be retrieved from the inventory System (303) as well as the configuration/policy/validation data store (304).

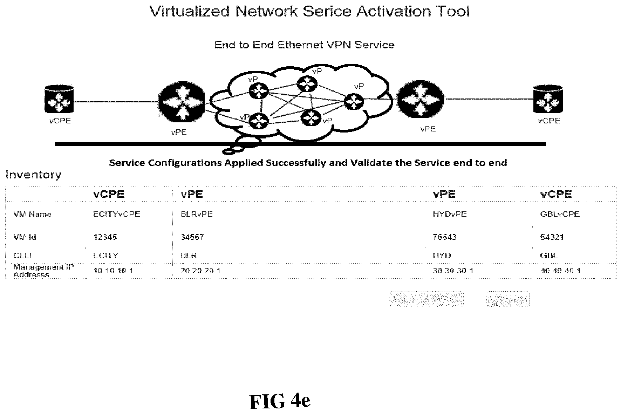

**Fig 4e** shows the activated and end to end tested service, after all the validations and configurations as explained in the figures above.

## Claims

1. A system comprising one or more computing devices for implementing an architecture for activation of virtual network service, comprising:
at least one processor (102) coupled to at least one memory (108) containing a machine readable medium comprising machine executable code having stored thereon instructions, the processor configured to execute the machine executable code to cause the processor to:
parse (201, 205) a request received from a client machine into one or more child templates;
apply a predefined configuration on one or more vendor network systems of a virtual network service, using orchestrators, wherein the predefined configuration, the vendor network system and the virtual network service are extracted from one or more of the child templates;
perform at least a two phase diagnostic check of a state of one or more load limits of components and of a performance service level of one or more devices of the vendor network system based on parameter values submitted with the request;
perform a healing function on the vendor network system based on the two phase diagnostic check;
perform a verification of the virtual network service; and
activate the virtual network service based on the verification and the diagnosis.

2. The system of claim 1, wherein the processor (102) is further configured to execute the machine executable code to cause the processor to:
validate command syntax and virtual network topology of the virtual network service for the request.

3. The system as claimed in claim 1, wherein the processor (102) is further configured to execute the machine executable code to cause the processor to:
create one or more templates comprising configuration for the vendor network system, by retrieving corresponding configuration details from an inventory.

4. The system as claimed in claim 3, wherein the processor (102) is further configured to execute the machine executable code to cause the processor to:
convert the created templates into data models supported by the vendor network system, and
apply the data models to the vendor network system.

5. The system as claimed in claim 1, wherein the processor (102) is further configured to execute the machine executable code to cause the processor to:
diagnosis the vendor network system,
verify a state of the vendor network system,
verify a service parameter of the vendor network system, and
check the network system based on the diagnosis.

## Patentansprüche

1. System umfassend eine oder mehrere Computervorrichtungen zur Implementierung einer Architektur zur Aktivierung eines virtuellen Netzwerkdienstes, umfassend:
mindestens einen Prozessor (102), der mit mindestens einem Speicher (108) gekoppelt ist, der ein maschinenlesbares Medium enthält, umfassend einen maschinenausführbaren Code aufweisend darauf gespeicherte Anweisungen, wobei der Prozessor konfiguriert ist, den maschinenausführbaren Code auszuführen, um zu bewirken, dass der Prozessor Folgendes ausführt:
Parsen (201,205) einer von einer Kundenmaschine empfangenen Anfrage in einer oder mehreren untergeordneten Vorlagen;
Anwenden einer vordefinierten Konfiguration auf ein oder mehrere Lieferanten-Netzwerksysteme eines virtuellen Netzwerkdienstes unter Verwendung von Orchestratoren, wobei die vordefinierte Konfiguration, das Lieferanten-Netzwerksystem und der virtuelle Netzwerkdienst aus einer oder mehreren untergeordneten Vorlagen abgerufen werden;
Durchführen mindestens einer zweiphasigen Diagnoseprüfung eines Zustandes einer oder mehrerer Belastungsgrenzen von Komponenten und eines Performance-Service-Levels einer oder mehrerer Vorrichtungen des Lieferanten-Netzwerksystems basierend auf mit der Anfrage übermittelten Parameterwerten;
Durchführen einer Heilungsfunktion im Lieferanten-Netzwerksystem basierend auf der zweiphasigen Diagnoseprüfung;
Durchführen einer Überprüfung des virtuellen Netzwerkdienstes; und
Aktivieren des virtuellen Netzwerkdienstes basierend auf der Überprüfung und der Diagnose.

2. System nach Anspruch 1, wobei der Prozessor (102) ferner konfiguriert ist, den maschinenausführbaren Code auszuführen, um zu bewirken, dass der Prozessor Folgendes ausführt:
Validieren der Befehlssyntax und der virtuellen Netzwerktopologie des virtuellen Netzwerkdienstes für die Anfrage.

3. System wie in Anspruch 1 beansprucht, wobei der Prozessor (102) ferner konfiguriert ist, den maschinenausführbaren Code auszuführen, um zu bewirken, dass der Prozessor Folgendes ausführt:
Erstellen einer oder mehrerer Vorlagen umfassend die Konfiguration für das Lieferanten-Netzwerksystem, indem entsprechende Konfigurationsdetails aus einem Inventar abgerufen werden.

4. System wie in Anspruch 3 beansprucht, wobei der Prozessor (102) ferner konfiguriert ist, den maschinenausführbaren Code auszuführen, um zu bewirken, dass der Prozessor Folgendes ausführt:
Umwandeln der erstellten Vorlagen in von dem Lieferanten-Netzwerksystem unterstützten Datenmodelle, und
Anwenden der Datenmodelle auf das Lieferanten-Netzwerksystem.

5. System wie in Anspruch 1 beansprucht, wobei der Prozessor (102) ferner konfiguriert ist, den maschinenausführbaren Code auszuführen, um zu bewirken, dass der Prozessor Folgendes ausführt:
Diagnose des Lieferanten-Netzwerksystems,
Überprüfen eines Zustandes des Lieferanten-Netzwerksystems,
Überprüfen eines Dienstparameters des Lieferanten-Netzwerksystems, und
Prüfen des Netzwerksystems basierend auf der Diagnose.

## Revendications

1. Système comprenant un ou plusieurs dispositifs informatiques pour mettre en œuvre une architecture pour une activation de service de réseau virtuel, comprenant :
au moins un processeur (102) couplé à au moins une mémoire (108) contenant un moyen lisible par machine comprenant un code exécutable par machine ayant stocké sur lui des instructions, le processeur configuré pour exécuter le code exécutable par machine pour amener le processeur à :
analyser (201,205) une requête reçue d'une machine cliente en un ou plusieurs modèles fils ;
appliquer une configuration prédéfinie sur un ou plusieurs systèmes de réseaux fournisseurs d'un service de réseau virtuel, en utilisant des orchestrateurs, dans lequel la configuration prédéfinie, le système de réseau fournisseur et le service de réseau virtuel sont extraits d'un ou plusieurs des modèles fils ;
effectuer au moins un contrôle diagnostic à deux phases d'un état d'un ou plusieurs limites de charge de composants et d'un niveau de service de prestation d'un ou plusieurs dispositifs du système de réseau fournisseur sur la base de valeurs de paramètres soumises avec la requête ;
effectuer une fonction de réparation sur le système de réseau fournisseur sur la base du contrôle diagnostic à deux phases ;
effectuer une vérification du service de réseau virtuel ; et
activer le service de réseau virtuel sur la base de la vérification et du diagnostic.

2. Système de la revendication 1, dans lequel le processeur (102) est en outre configuré pour exécuter le code exécutable par machine pour amener le processeur à :
valider une syntaxe de commande et une topologie de réseau virtuel du service de réseau virtuel pour la requête.

3. Système tel que revendiqué dans la revendication 1, dans lequel le processeur (102) est en outre configuré pour exécuter le code exécutable par machine pour amener le processeur à :
créer un ou plusieurs modèles comprenant une configuration pour le système de réseau fournisseur, en récupérant des détails de configuration correspondants d'un inventaire.

4. Système tel que revendiqué dans la revendication 3, dans lequel le processeur (102) est en outre configuré pour exécuter le code exécutable par machine pour amener le processeur à :
convertir les modèles créés en modèles de données supportés par le système de réseau fournisseur, et
appliquer les modèles de données au système de réseau fournisseur.

5. Système tel que revendiqué dans la revendication 1, dans lequel le processeur (102) est en outre configuré pour exécuter le code exécutable par machine pour amener le processeur à :
diagnostiquer le système de réseau fournisseur,
vérifier un état du système de réseau fournisseur,
vérifier un paramètre de service du système de réseau fournisseur, et
contrôler le système de réseau sur la base du diagnostic.
